Europäisches Patentamt

European Patent Office

Office européen des brevets

(19)

(11) Veröffentlichungsnummer: **0 336 289 B1**

## (12) EUROPÄISCHE PATENTSCHRIFT

(45) Veröffentlichungstag der Patentschrift: **30.06.93**

(51) Int. Cl.5: **C08K 5/00**, C08L 57/08, C08L 27/06

(21) Anmeldenummer: **89105592.3**

(22) Anmeldetag: **30.03.89**

(54) **Stabilisator für Polymerisate auf Basis chlorhaltiger Olefine, Verfahren zu seiner Herstellung und diesen enthaltende Polymerisate.**

(30) Priorität: **06.04.88 DE 3811493**

(43) Veröffentlichungstag der Anmeldung:
**11.10.89 Patentblatt 89/41**

(45) Bekanntmachung des Hinweises auf die
Patenterteilung:
**30.06.93 Patentblatt 93/26**

(84) Benannte Vertragsstaaten:
**AT BE CH DE ES FR GB IT LI NL SE**

(56) Entgegenhaltungen:
**DE-A- 2 716 389**

(73) Patentinhaber: **NEYNABER CHEMIE GmbH
Am Wedenberg Postfach 11 20
W-2854 Loxstedt(DE)**

(72) Erfinder: **Worschech, Kurt, Dr.
Alte Strasse 4
W-2854 Loxstedt(DE)**
Erfinder: **Wedl, Peter
Löningstrasse 13
W-2850 Bremerhaven(DE)**
Erfinder: **Fleischer, Erwin
Dwarsweg 1
W-2858 Schiffdorf(DE)**
Erfinder: **Löffelholz, Frido
Vieländer Weg 226 F
W-2850 Bremerhaven-Surheide(DE)**
Erfinder: **Jaeckel, Manfred
Memeler Strasse 29
W-2854 Loxstedt(DE)**

EP 0 336 289 B1

## Beschreibung

Die Erfindung betrifft einen Stabilisator für Polymerisate auf Basis chlorhaltiger Olefine, Verfahren zu seiner Herstellung sowie diesen enthaltende Polymerisate.

Zu den mit dem Stabilisator der Erfindung zu stabilisierenden Polymerisaten gehören PVC und PVC-Copolymerisate, insbesondere Suspensions-, Masse- und Emulsions-PVC.

Bei Herstellern und Anwendern von Halbzeug und Fertigwaren aus Hart-PVC besteht neuerdings die Tendenz, die bisher üblichen Schwermetallstabilisatoren wie Blei- und Cadmiumverbindungen durch solche auf Calcium- und Zinkbasis zu ersetzen. Dies ist auf wenigen Gebieten auch bereits gelungen. So werden beispielsweise PVC-Flaschen für Trinkwasser aus Geruchsgründen schon seit längerem ohne Schwermetallstabilisatoren hergestellt. Auch die Herstellung kalandrierter Folien auf Basis von Ca/Zn-Stabilisatoren bereitet, soweit es sich um gedeckte Folien handelt, kaum noch Probleme. Die Herstellung transparenter bzw. glasklarer Folien ohne Schwermetallstabilisatoren ist jedoch schwierig. Derartigen Folien werden relativ große Mengen an Epoxiden, insbesondere epoxidiertes Sojaöl, zugesetzt. Da diese Costabilisatoren gleichzeitig jedoch weichmachend wirken, verbietet sich ihre Mitverwendung bei der Herstellung von PVC-Druckrohren. Dennoch ist auch die Herstellung von solchen Rohren heute problemlos mit Ca/Zn-Stabilisatoren möglich, vgl. DE-OS 29 41 596. In diesen Fällen wird jedoch das Problem einer ausreichenden Stabilisierung dadurch gelöst, daß solche Rohre dunkelgrau bzw. dunkelbraun eingefärbt werden, so daß man auf eine gute Anfangsfarbe (early colour) keine Rücksicht nehmen muß.

Dagegen wird in der Profilindustrie von Hart-PVC eine extrem gute Anfangsfarbe verlangt. Die Profilherstellung unterscheidet sich von der Rohrherstellung dadurch, daß die Profilquerschnitte sehr kompliziert sein können und oft mit extrem dünnen Wandstärken gefertigt werden. Außerdem verlangen Profile immer ein gutes Finish und erfordern häufig Zusätze verschiedener Modifier, welche die Viskosität der PVC-Schmelze erhöhen und den Materialfluß erschweren. Die bekannten Ca/Zn-Stabilisatoren und zugesetzte Epoxide reichen hier zu einer wirksamen Stabilisierung nicht aus, ebenso nicht Zusätze von Costabilisatoren wie Polyolen oder Natrium-aluminium-silikaten. Polyole wie Pentaerythrit ermöglichen zwar eine sichtbare Verbesserung der Anfangsfarbe, neigen jedoch zur Sublimation und führen in den Kalibriereinrichtungen der Profilstraßen zu starken Belagsbildungen. Dadurch wird die Oberflächenausbildung der Profile gestört. Auch der kombinierte Einsatz kurzkettiger Pentaerythritester (Pentaerythrit-mono-, -di- und -triacetate) und freier Polyole, die zu diesem Zweck bereits bekannt geworden ist, hat zu keiner Lösung dieses Problems geführt.

Die Stabilisierung der obengenannten Polymere mit handelsüblichen 1,3-Diketonen, z.B. Benzoyl-stearoyl-methan, bringt zwar eine helle Anfangsfarbe, die jedoch im Verlauf der Verarbeitung über einen längeren Zeitraum nicht beibehalten wird. Mit den gleichen Nachteilen ist ein aus der DE-PS 27 16 389 bekanntes Stabilisierungssystem behaftet, das Acetylacetonate des Calciums und/oder Magnesiums neben Calciumsilikaten oder -aluminaten, Mercaptanen oder Mercaptiden und Calciumsalzen von Monocarbonsäuren enthält.

Die Erfindung ist auf einen Stabilisator für Polymerisate auf Basis chlorhaltiger Olefine gerichtet, der den Polymerisaten insbesondere die folgenden vorteilhaften Eigenschaften verleiht:

1. Schwermetallfreiheit,

2. stabile bzw. lange Anfangsfarbe

3. keine Verfärbung bei höheren Temperaturen innerhalb einer für die Herstellung von Kunststoffprofilen benötigten Zeitspanne,

4. Beständigkeit gegenüber Umwelteinflüssen, insbesondere beim Außeneinsatz der Profile (UV-Stabilität),

5. problemlose Verarbeitbarkeit der stabilisierten Kunststoffe, insbesondere Vermeidung der Ausbildung von Ablagerungen an den Formwerkzeugen.

Diese Aufgabe wird erfindungsgemäß durch einen Stabilisator gelöst, der folgende Komponenten enthält:

a) Ca-Komplexe von 1,3-Diketonen der Zusammensetzung

$$[R^1CO\text{-}CH = C(R^2)\text{-}O\text{-}]_x \; Ca(OH)_y$$

in der

$R^1$ und $R^2$ gleiche oder verschiedene Reste aus der von $C_1$-$C_4$-Alkyl und gegebenenfalls in p-Stellung substituiertem Phenyl gebildeten Gruppe bedeuten sowie

x einen Wert von 1 bis 2 und y einen Wert von 1 bis 0 aufweist, wobei die Beziehung x + y = 2 gilt,

b) Kohlenwasserstoffwachse

und

c) Vollester aus gesättigten, geradkettigen $C_{12}$-$C_{34}$-Monocarbonsäuren und Polyolen mit 2 oder mehr als 2 Kohlenstoffatomen und 2 oder mehr als 2 Hydroxygruppen

und/oder

Partialester aus gesättigten, geradkettigen $C_{12}$-$C_{34}$-Monocarbonsäuren und Polyolen mit 2 oder mehr als 2 Kohlenstoffatomen und 2 oder mehr als 2 Hydroxygruppen, die im Zahlenmittel mindestens eine freie Hydroxylgruppe aufweisen, sowie gegebenenfalls

d) Zinksalze gesättigter, geradkettiger $C_8$-$C_{22}$-Monocarbonsäuren.

Die vorgenannten Ca-Komplexe von 1,3-Diketonen stellen neutrale ($x = 2$, $y = 0$) oder basische ($x = 1$, $y = 1$) Verbindungen dar. Die Gruppen $R^1$ und $R^2$ in der allgemeinen Formel können z.B. Methyl, Ethyl, Propyl, Butyl, Phenyl, p-Chlorphenyl oder dergleichen bedeuten; bevorzugt sind die Gruppen $R^1$ und $R^2$ jeweils Methyl; weiterhin bevorzugt sind die Neutralverbindungen mit $x = 2$ und $y = 0$.

Die in den Stabilisatoren der Erfindung enthaltenen Kohlenwasserstoffwachse sind die in der PVC-Verarbeitung üblichen; es handelt sich dabei um Polyethylenwachse und insbesondere um Paraffinwachse mit Schmelz-punkten zwischen 52 und 110, vorzugsweise 70 bis 80 °C.

Die in den Stabilisatoren der Erfindung enthaltenen Ester und/oder Partialester gesättigter, geradkettiger $C_{12}$-$C_{34}$-Monocarbonsäuren sind ebenfalls als solche bekannt, vgl. DE-OS 26 42 509. Bevorzugte Polyolkomponenten für die Ester und/oder Partialester weisen bis zu 15 Kohlenstoffatome auf, z.B. Glycerin, Diglycerin, Triglycerin, Trimethylolpropan, Di-trimethylolpropan, Pentaerythrit, Di-pentaerythrit und dergleichen. Bevorzugte Monocarbonsäurekomponenten sind Stearinsäure und/oder Palmitinsäure; es können auch z.B. Laurin-, Myristin-, Behen- und Montansäuren verwendet werden. Typische Vertreter für Vollester sind Ethylenglykoldistearat, Glycerintristearat und Pentaerythrittetrastearat, für Partialester Pentaerythritdistearat und Glycerinsequimontanat.

Die erfindungsgemäß einzusetzenden Zinksalze sind ebenfalls an sich bekannt; bevorzugt werden Zinkoctoat sowie technische Zinkpalmitat/-stearat-Gemische. Auch basische Zinksalze des Typs $(ZnO)_n Zn$-$(RCOO)_2$ mit z.B. $n = 0,5$-$2$ können eingesetzt werden.

Gemäß einer weiteren vorteilhaften Ausführungsform der Erfindung enthält der Stabilisator die folgenden Komponenten:

a) Ca-acetylacetonat, erhältlich aus 1 Mol $Ca(OH)_2$ und 1 bis 2 Mol Acetylaceton,

b) Paraffin- bzw. Polyethylenwachse,

c) Diester des Pentaerythrits, des Glycerins und/oder des Trimethylolpropans mit gesättigten, geradketti-gen $C_{12}$-$C_{22}$-Monocarbonsäuren sowie

d) gegebenenfalls Zinkdistearat.

Der Stabilisator kann die 1,3-Diketone, berechnet aus der Menge der vorhandenen Ca-diketon-Komplexe, und die Paraffin-bzw. Polyethylenwachse in Gewichtsverhältnissen zueinander von 5 : 2 bis 1 : 1 enthalten. Weiterhin können die 1,3-Diketone, berechnet aus der Menge der vorhandenen Ca-diketon-Komplexe, und die Zinksalze gesättigter, geradkettiger $C_8$-$C_{22}$-Monocarbonsäuren in Gewichtsverhältnissen zueinander von 2 : 1 bis 3 : 5 vorhanden sein, und zwar in Abhängigkeit von den jeweiligen Anwendungsgebieten.

Gemäß einer weiteren vorteilhaften Ausführungsform der Erfindung kann der Stabilisator zusätzlich

e) sekundäre oder tertiäre Ester der phosphorigen Säure ($P(OH)_3$) mit $C_8$-$C_{22}$-Monoalkanolen, Phenol und/oder $C_6$-$C_{12}$-alkylsubstituiertem Phenol und gegebenenfalls Polyolen, die 2 oder mehr als 2 Kohlenstoffatome und 2 oder mehr als 2 Hydroxylgruppen aufweisen,

enthalten. Typische Beispiele für diese Phosphite sind der folgenden Aufstellung zu entnehmen, wobei "alkyl" eine Alkylgruppe mit 8 bis 22 Kohlenstoffatomen und "aryl" eine Phenyl- oder $C_6$-$C_{12}$-alkylsubstitu-ierte Phenylgruppe bedeutet und "alkyl" und "aryl" untereinander ausgetauscht werden können. Die Phosphite gemäß der folgenden Aufstellung sind tertiäre Ester, d.h. sämtliche OH-Funktionen am Phosphoratom sind verestert:

Trialkylphosphit

Dialkyl-arylphosphit

Alkyldiarylphosphit

Triarylphosphit.

Die tertiären Ester sind bevorzugt, man kann jedoch auch die entsprechenden sekundären Phosphite (mit einer freien OH-Funktion am Phosphoratom) verwenden.

Die folgenden Beispiele betreffen "gemischte" Ester der phosphorigen Säure mit Polyolen. Sie sind formal entstanden durch Umsetzung von Dialkyl- oder Diarylphosphiten mit den freien OH-Gruppen eines Polyols oder durch Umsetzung von Monoalkyl- bzw. Monoarylphosphiten mit 2 OH-Gruppen eines Polyols unter Ausbildung eines heterocyclischen Ringes, wobei im letzteren Falle bei geeigneter Anzahl von OH-Gruppen in dem Polyol auch 2 oder mehr als 2 Monoalkyl- bzw. Monoarylphosphite zur Reaktion gebracht werden können. Typische Beispiele sind:

Ethylenglykol-bis(dialkylphosphit)

Glycerin-tris(dialkylphosphit)

Pentaerythrit-bis(alkylphosphit)

Ethylenglykol-alkylphosphit

Ethylenglykol-bis(diarylphosphit)

Propylen-bis(diarylphosphit)

Trimethylolpropan-tris(dialkylphosphit).

Die hier genannten Phosphite sind teilweise handelsüblich oder können in einfacher Weise hergestellt werden, z.B. aus Phosphortrichlorid und den entsprechenden Alkoholen. Dabei ist lediglich zu beachten, daß im allgemeinen die Reaktion nur bis zu der Stufe der Dialkyl- oder Diarylphosphite problemlos verläuft; die Umsetzung der dritten OH-Funktion am Phosphoratom ist meistens nur über die entsprechende chlorierte Verbindung möglich.

Der Einsatz der vorgenannten Phosphite führt zu einer weiteren Verbesserung der Anfangsfarbe der mit den Stabilisatoren der Erfindung ausgerüsteten Polymerisate.

Gemäß einer weiteren vorteilhaften Ausführungsform der Erfindung kann der Stabilisator zusätzlich die folgenden Additive enthalten:

f) synthetische, kristalline, 13 bis 25 Gew.-% gebundenes Wasser enthaltende, feinteilige Natriumalumosilikate, die - bezogen auf die wasserfreie Form - die Zusammensetzung 0,7 - 1,1 $Na_2O$ . $Al_2O_3$ . 1,3 - 2,4 $SiO_2$ aufweisen,

g) Epoxide von Estern ungesättigter, geradkettiger Fettsäuren und/oder

h) übliche, die Rheologie bzw. die Verarbeitbarkeit der Polymerisate beeinflussende Zusätze.

Der Einsatz von Natriumalumosilikaten in PVC-Polymerisaten ist als solcher bekannt, vgl. die bereits benannte DE-OS 29 41 596. Als Epoxide von Estern ungesättigter, geradkettiger Fettsäuren eignen sich insbesondere die an sich für PVC-Polymerisate bekannten epoxidierten Sojaöle mit Oxiranzahlen zwischen 6 und 8 und Jodzahlen von weniger als 5.

Als übliche, die Rheologie bzw. die Verarbeitbarkeit der Polymerisate beeinflussenden Zusätze sind insbesondere die üblichen Flow improver, oxidierte Polyethylenwachse, Wachsester, Hydroxystearinsäuren (als antiplating-Mittel) und dergleichen zu nennen.

Gemäß einer weiteren vorteilhaften Ausführungsform der Erfindung kann der Stabilisator die folgende Zusammensetzung aufweisen:

a) 1 - 4, insbesondere 2 - 2,8 Gew.-Teile der Ca-Komplexe von 1,3-Diketonen

b) 0,4 - 4,0, insbesondere 1,2 - 2,0 Gew.-Teile der Kohlenwasserstoffwachse,

c) 1,2 - 6,0, insbesondere 2,0 - 4,0 Gew.-Teile der Vollester und/oder der Partialester gesättigter, geradkettiger $C_{12}$-$C_{34}$-Monocarbonsäuren,

d) 0,8 - 4,0, insbesondere 1,6 - 2,4 Gew.-Teile der Zinksalze gesättigter, geradkettiger $C_{18}$-$C_{22}$-Monocarbonsäuren,

sowie gegebenenfalls

e) 0,4 - 4, insbesondere 1,2 - 3,2 Gew.-Teile der sekundären oder tertiären Ester der phosphorigen Säure,

f) 1,2 - 12, insbesondere 2,0 - 6,0 Gew.-Teile der Natriumalumosilikate,

g) 2,0 - 12, insbesondere 4,0 - 6,0 Gew.-Teile der epoxidierten Fettsäureester und/oder

h) übliche Mengen der die Rheologie bzw. Verarbeitbarkeit der Polymerisate beeinflussenden Zusätze.

Gemäß einer weiteren vorteilhaften Ausführungsform der Erfindung enthalten die Stabilisatoren 10 bis 40, insbesondere 20 bis 30 Gew.-Teile der Ca-Diketon-Komplexe, bezogen auf Gesamtgewicht des Stabilisators.

Die Stabilisatoren der Erfindung können erhalten werden, indem man die Einzelkomponenten mischt. In bestimmten Fällen können sich jedoch Probleme hinsichtlich der Dispergierbarkeit des Ca-diketon-Komplexes in dem Stabilisator ergeben. Wenn in der Stabilisator-Zusammensetzung kristalline kompakte Teilchen zurückbleiben, hat dies keinen Einfluß auf die Stabilität; die festen Teilchen können jedoch bei der Extrusion der PVC-Formmassen stören und z.B. zu Kraterbildungen auf den Profiloberflächen führen. Es hat sich daher als vorteilhaft erwiesen, die Ca-diketon-Komplexe "in situ" in einer Schmelze von Kohlenwasserstoffwachs sowie Vollestern und/oder Partialestern herzustellen, wobei man die gegebenenfalls zuzusetzenden Zinksalze mindestens teilweise vor der Umsetzung zugibt bzw. in der Schmelze aus Zinkoxid und $C_8$-$C_{22}$-Monocarbonsäuren vor den Ca-Komplexen herstellt.

Die Erfindung ist weiterhin auf ein Verfahren zur Herstellung der obengenannten Stabilisatoren gerichtet, die die vorgenannten Komponenten a bis c sowie gegebenenfalls die Komponenten d, e, f, g und/oder h in jeweils wirksamen bzw. den angegebenen Mengen enthalten. Zweckmäßigerweise werden dabei die Komponenten e bis h nach der Umsetzung zugesetzt; soweit sie sich im Rahmen der Herstellung jedoch inert verhalten, können sie auch vor bzw. während der Umsetzung zugemischt werden.

Die Erfindung betrifft weiterhin stabilisierte Polymerisate auf Basis chlorhaltiger Olefine, insbesondere Hart-PVC, die mit den Stabilisatoren der Erfindung in einer Menge ausgerüstet sind, daß sie die Komponenten a bis c sowie gegebenenfalls d, e, f, g und/oder h in jeweils wirksamen Mengen enthalten.

Besonders bevorzugte stabilisierte Polymerisate enthalten auf jeweils 100 Gew.-Teile Polymerisat

a) 0,25 - 1,0, insbesondere 0,5 - 0,7 Gew.-Teile der Ca-Komplexe von 1,3-Diketonen,

b) 0,1 - 1,0, insbesondere 0,3 - 0,5 Gew.-Teile der Kohlenwasserstoffwachse,

c) 0,3 - 1,5, insbesondere 0,5 - 1,0 Gew.-Teile der Vollester und/oder der Partialester gesättigter, geradkettiger $C_{12}$-$C_{34}$-Monocarbonsäuren,

d) 0,2 - 1,0, insbesondere 0,4 - 0,6 Gew.-Teile der Zinksalze gesättigter, geradkettiger $C_8$-$C_{22}$-Monocarbonsäuren,

sowie gegebenenfalls

e) 0,1 - 1, insbesondere 0,3 - 0,8 Gew.-Teile der sekundären oder tertiären Ester der phosphorigen Säure,

f) 0,3 - 3, insbesondere 0,5 - 1,5 Gew.-Teile der Natriumalumosilikate,

g) 0,5 - 3, insbesondere 1 - 1,5 Gew.-Teile der epoxidierten Fettsäureester und/oder

h) übliche Mengen der die Rheologie bzw. Verarbeitbarkeit beeinflussenden Zusätze.

Die Erfindung wird im folgenden anhand von bevorzugten Ausführungsbeispielen näher erläutert.

Herstellung eines Calciumacetylacetonat/Zinkstearat/Kohlenwasserstoffwachs/Partialester-Stabilisators.

44,8 g (0,17 mol) technische Stearinsäure (ca. 50 Gew.-% Stearinsäure und 50 Gew.-% Palmitinsäure), 30 g Paraffin (Smp. 71 °C) und 100 g Pentaerythritdistearat wurden unter Schmelzen auf 130 °C erhitzt. Unter Rühren wurden 6,9 g (0,085 mol) Zinkoxid eingetragen und die Schmelze bei 130 bis 150 °C unter vermindertem Druck (15 bis 20 hPa) solange gerührt, bis sich das Zinkoxid gelöst hatte. Nach dem Abkühlen auf 110 °C wurden dem Reaktionsgemisch nacheinander 40 g (0,4 mol) Acetylaceton und 15,5 g (0,2 mol) Calciumhydroxid hinzugefügt. Anschließend wurde die Schmelze unter Rühren und bei schwach vermindertem Druck (700 bis 900 hPa) solange auf 100 bis 110 °C erhitzt, bis sich das Calciumoxid gelöst hatte. Gegen Ende der Reaktion wurde der Druck auf 15 bis 20 hPa vermindert. Das Reaktionsgemisch erstarrte beim Abkühlen auf Umgebungstemperatur.

Beispiel 2.

Stabilisierung eines PVC-Polymerisats.

Es wurde zunächst ein Grundansatz aus 100 Gew.-Teilen Suspensions-PVC mit einem K-Wert von 65, 1 Gew.-Teil eines flüssigen epoxidierten Sojaöls (Oxiranzahl 6 bis 8, Jodzahl weniger als 5) und 1 Gew.-Teil eines synthetischen Zeoliths der Zusammensetzung $Na_2O$ : $Al_2O_3$ : $SiO_2$ = 0,9 : 1 : 2,04 mit einem Wassergehalt von 21,6 Gew.-% und einem Teilchengrößenmaximum von 3 bis 6 $\mu$ hergestellt und mit 2,3 Gew.-Teilen des Stabilisators gemäß Beispiel 1 versetzt.

Die erhaltene PVC-Formmasse wurde auf einem Laborwalzwerk der Abmessung 450 x 220 mm (Fa. Berstorff) bei einer Walzentemperatur von 170 °C und einer Walzendrehzahl von 12,5 U/min in Gleichlauf im Verlauf von 5 Minuten zu Prüffellen verarbeitet. Zur Prüfung der statischen Thermostabilität wurden die ca. 0,5 mm dicken Felle zu quadratischen Probestücken mit 10 mm Kantenlänge zerschnitten, die anschließend in einem Trockenschrank mit 6 rotierenden Horden (Heraeus FT 420 R) einer Temperatur von 180 °C ausgesetzt wurden. Im Abstand von 15 min wurden Proben entnommen und deren Farbveränderung begutachtet. Die Ergebnisse sind in der Tabelle zusammengefaßt.

In der Tabelle ist für jede Formmasse zunächst unter "Anfangsstabilität" die Zeit angegeben, in der die Proben eine deutliche Verfärbung zeigten. Unter "Stabilitätsabbruch" ist diejenige Zeit angegeben, nach der die Tests wegen zu starker Verfärbung abgebrochen wurden. Im übrigen waren alle Proben vor dem Beginn der thermischen Behandlung ganz leicht gelblich gefärbt.

Beispiel 3.

Es wurde ein PVC-Stabilisatorgemisch gemäß Beispiel 2 hergestellt, jedoch unter Zusatz von 0,5 Gew.-Teilen, bezogen auf 100 Gew.-Teile PVC, Didecyl-phenylphosphit (Handelsprodukt).

Die PVC-Formmasse wurde wie im Beispiel 2 beschrieben getestet; die Ergebnisse sind in der Tabelle zusammengefaßt.

Beispiel 4.

Es wurde ein PVC/Stabilisator-Gemisch gemäß Beispiel 2 hergestellt, jedoch unter Zusatz von 0,5 Gew.-Teilen, bezogen auf PVC, Tris-(nonylphenyl)-phosphit (Handelsprodukt). Die erhaltene Formmasse wurde wie im Beispiel 2 beschrieben getestet; die Ergebnisse sind in der Tabelle zusammengefaßt.

Beispiel 5.

Es wurde ein PVC/Stabilisator-Gemisch gemäß Beispiel 2 hergestellt, jedoch unter Zusatz von 0,5 Gew.-Teilen Pentaerythrit-bis(stearylphosphit) (Handelsprodukt).

Die erhaltene Formmasse wurde wie im Beispiel 2 beschrieben getestet; die Ergebnisse sind in der Tabelle zusammengefaßt.

Die Ergebnisse zeigen, daß bereits für die Formmasse des Beispiels 2 die Anfangsstabilität mit 30 min gut ist; der Stabilitätsabbruch nach 105 min zeigt weiterhin, daß die Formmasse für alle üblichen Verarbeitungsverfahren thermisch stabil ist. Die Beispiele 3 bis 5 zeigen die erhebliche Steigerung der Anfangsstabilität, die bei einem Zusatz an Estern der phosphorigen Säure erreichbar ist.

Tabelle

| Beispiel Nr. (Formmasse) | Anfangsstabilität (min) | Stabilitätsabbruch (min) |
|---|---|---|
| 2 | 30 | 105 |
| 3 | 60 | 105 |
| 4 | 45 | 105 |
| 5 | 45 | 105 |

**Patentansprüche**

1. Stabilisator für Polymerisate auf Basis chlorhaltiger Olefine, enthaltend
   a) Ca-Komplexe von 1,3-Diketonen der Zusammensetzung

   $$[R^1CO\text{-}CH = C(R^2)\text{-}O\text{-}]_x \, Ca(OH)_y$$

   in der
   $R^1$ und $R^2$ gleiche oder verschiedene Reste aus der von $C_1$-$C_4$-Alkyl und gegebenenfalls in p-Stellung substituiertem Phenyl gebildeten Gruppe bedeuten sowie
   x einen Wert von 1 bis 2 und y einen Wert von 1 bis 0 aufweist, wobei die Beziehung x + y = 2 gilt,
   b) Kohlenwasserstoffwachse
   und
   c) Vollester aus gesättigten, geradkettigen $C_{12}$-$C_{34}$-Monocarbonsäuren und Polyolen mit 2 oder mehr als 2 Kohlenstoffatomen und 2 oder mehr als 2 Hydroxygruppen
   und/oder
   Partialester aus gesättigten, geradkettigen $C_{12}$-$C_{34}$-Monocarbonsäuren und Polyolen mit 2 oder mehr als 2 Kohlenstoffatomen und 2 oder mehr als 2 Hydroxygruppen, die im Zahlenmittel mindestens eine freie Hydroxylgruppe aufweisen, sowie gegebenenfalls
   d) Zinksalze gesättigter, geradkettiger
   $C_8$-$C_{22}$-Monocarbonsäuren.

2. Stabilisator nach Anspruch 1, enthaltend
   a) Ca-acetylacetonat, erhältlich aus 1 Mol $Ca(OH)_2$ und 1 bis 2 Mol Acetylaceton,
   b) Paraffin- bzw. Polyethylenwachse,

c) Diester des Pentaerythrits, des Glycerins und/oder des Trimethylolpropans mit gesättigten, geradkettigen $C_{12}$-$C_{22}$-Monocarbonsäuren sowie

d) gegebenenfalls Zinkdistearat.

3. Stabilisator nach mindestens einem der Ansprüche 1 oder 2, dadurch gekennzeichnet, daß er zusätzlich

e) sekundäre oder tertiäre Ester der phosphorigen Säure mit $C_8$-$C_{22}$-Monoalkanolen, Phenol und/oder $C_6$-$C_{12}$-alkylsubstituiertem Phenol und gegebenenfalls Polyolen, die 2 oder mehr als 2 Kohlenstoffatome und 2 oder mehr als 2 Hydroxylgruppen aufweisen,

enthält.

4. Stabilisator nach mindestens einem der Ansprüche 1 bis 3, dadurch gekennzeichnet, daß er zusätzlich folgende Additive enthält:

f) synthetische, kristalline, 13 bis 25 Gew.-% gebundenes Wasser enthaltende, feinteilige Natriumalumosilikate, die - bezogen auf die wasserfreie Form - die Zusammensetzung 0,7 - 1,1 $Na_2O$ . $Al_2O_3$ . 1,3 - 2,4 $SiO_2$ aufweisen,

g) Epoxide von Estern ungesättigter, geradkettiger Fettsäuren und/oder

h) übliche, die Rheologie bzw. die Verarbeitbarkeit der Polymerisate beeinflussende Zusätze.

5. Stabilisator nach mindestens einem der Ansprüche 1 bis 4 der Zusammensetzung

a) 1 - 4, insbesondere 2 - 2,8 Gew.-Teile der Ca-Komplexe von 1,3-Diketonen,

b) 0,4 - 4,0, insbesondere 1,2 - 2,0 Gew.-Teile der Kohlenwasserstoffwachse,

c) 1,2 - 6,0, insbesondere 2,0 - 4,0 Gew.-Teile der Vollester und/oder der Partialester gesättigter, geradkettiger $C_{12}$-$C_{34}$-Monocarbonsäuren,

d) 0,8 - 4,0, insbesondere 1,6 - 2,4 Gew.-Teile der Zinksalze gesättigter, geradkettiger $C_8$-$C_{22}$-Monocarbonsäuren,

sowie gegebenenfalls

e) 0,4 - 4, insbesondere 1,2 - 3,2 Gew.-Teile der sekundären oder tertiären Ester der phosphorigen Säure,

f) 1,2 - 12, insbesondere 2,0 - 6,0 Gew.-Teile der Natriumalumosilikate,

g) 2,0 - 12, insbesondere 4,0 - 6,0 Gew.-Teile der epoxidierten Fettsäureester und/oder

h) übliche Mengen der die Rheologie bzw. Verarbeitbarkeit der Polymerisate beeinflussenden Zusätze.

6. Stabilisator nach Anspruch 5, enthaltend

a) 10 - 40, insbesondere 20 - 30 Gew.-Teile Ca-diketon-Komplexe auf 100 Gew.-Teile des Stabilisatorgesamtgewichts.

7. Stabilisator nach mindestens einem der Ansprüche 1 bis 4, erhältlich durch eine Umsetzung von Calciumhydroxid und den 1,3-Diketonen in einer Schmelze von Kohlenwasserstoffwachs und Partialestern, wobei man gegebenenfalls zuzusetzende Zinksalze mindestens teilweise vor der Umsetzung zugibt bzw. in der Schmelze aus Zinkoxid und $C_8$-$C_{22}$-Monocarbonsäuren vor den Ca-Komplexen herstellt.

8. Verfahren zur Herstellung von Stabilisatoren für Polymerisate auf Basis chlorhaltiger Olefine, enthaltend

a) Ca-Komplexe von 1,3-Diketonen der Zusammensetzung

$$(R^1CO\text{-}CH = C(R^2)\text{-}O\text{-})_x \, Ca(OH)_y$$

in der

$R^1$ und $R^2$ gleiche oder verschiedene Reste aus der von $C_1$-$C_4$-Alkyl und gegebenenfalls in p-Stellung substituiertem Phenyl gebildeten Gruppe bedeuten und

x einen Wert von 1 bis 2 und y einen Wert von 1 bis 0 aufweist, wobei die Beziehung x + y = 2 gilt,

b) Kohlenwasserstoffwachse und

7

c) Vollester aus gesättigten, geradkettigen $C_{12}$-$C_{34}$-Monocarbonsäuren und Polyolen mit 2 oder mehr als 2 Kohlenstoffatomen und 2 oder mehr als 2 Hydroxygruppen

und/oder

Partialester aus gesättigten, geradkettigen $C_{12}$-$C_{34}$-Monocarbonsäuren und Polyolen mit 2 oder mehr als 2 Kohlenstoffatomen und 2 oder mehr als 2 Hydroxygruppen, die im Zahlenmittel mindestens eine freie Hydroxylgruppe aufweisen, sowie gegebenenfalls

d) Zinksalze gesättigter, geradkettiger $C_8$-$C_{22}$-Monocarbonsäuren,

gekennzeichnet durch eine Umsetzung von Calciumhydroxid und den 1,3-Diketonen in einer Schmelze von Kohlenwasserstoffwachs sowie Vollestern und/oder Partialestern, wobei man gegebenenfalls zuzusetzende Zinksalze mindestens teilweise vor der Umsetzung zugibt bzw. in der Schmelze aus Zinkoxid und $C_8$-$C_{22}$-Monocarbonsäuren vor den Ca-Komplexen herstellt.

9. Verfahren nach Anspruch 8, dadurch gekennzeichnet, daß man während oder nach der Umsetzung

e) sekundäre oder tertiäre Ester der phosphorigen Säure mit $C_8$-$C_{22}$-Monoalkanolen, Phenol und/oder $C_6$-$C_{12}$-alkyl-substituiertem Phenol und gegebenenfalls Polyolen, die 2 oder mehr als 2 Kohlenstoffatome und 2 oder mehr als 2 Hydroxylgruppen aufweisen,

f) synthetische, kristalline, 13 bis 25 Gew.-% gebundenes Wasser enthaltende, feinteilige Natriumalumosilikate, die - bezogen auf die wasserfreie Form - die Zusammensetzung 0,7 - 1,1 $Na_2O$ . $Al_2O_3$ . 1,3 - 2,4 $SiO_2$ aufweisen,

g) Epoxide von Estern ungesättigter, geradkettiger Fettsäuren und/oder

h) übliche, die Rheologie bzw. die Verarbeitbarkeit der Polymerisate beeinflussende Zusätze zusetzt.

10. Verfahren nach Anspruch 8 oder 9 zur Herstellung eines Stabilisators der Zusammensetzung

a) 1 - 4, insbesondere 2 - 2,8 Gew.-Teile der Ca-Komplexe von 1,3-Diketonen,

b) 0,4 - 4,0, insbesondere 1,2 - 2,0 Gew.-Teile der Kohlenwasserstoffwachse,

c) 1,2 - 6,0, insbesondere 2,0 - 4,0 Gew.-Teile der Vollester und/oder der Partialester gesättigter, geradkettiger $C_{12}$-$C_{34}$-Monocarbonsäuren,

d) 0,8 - 4,0, insbesondere 1,6 - 2,4 Gew.-Teile der Zinksalze gesättigter, geradkettiger $C_8$-$C_{22}$-Monocarbonsäuren,

sowie gegebenenfalls

e) 0,4 - 4, insbesondere 1,2 - 3,2 Gew.-Teile der sekundären oder tertiären Ester der phosphorigen Säure,

f) 1,2 - 12, insbesondere 2,0 - 6,0 Gew.-Teile der Natriumalumosilikate,

g) 2,0 - 12, insbesondere 4,0 - 6,0 Gew.-Teile der epoxidierten Fettsäureester und/oder

h) übliche Mengen der die Rheologie bzw. Verarbeitbarkeit der Polymerisate beeinflussenden Zusätze.

11. Stabilisierte Polymerisate auf Basis chlorhaltiger Olefine, insbesondere Hart-PVC, enthaltend in jeweils wirksamen Mengen

a) Ca-Komplexe von 1,3-Diketonen der Zusammensetzung

$$[R^1CO-CH = C(R^2)-O-]_x \, Ca(OH)_y$$

in der

$R^1$ und $R^2$ gleiche oder verschiedene Reste aus der von $C_1$-$C_4$-Alkyl und gegebenenfalls in p-Stellung substituiertem Phenyl gebildeten Gruppe bedeuten sowie

x einen Wert von 1 bis 2 und y einen Wert von 1 bis 0 aufweist, wobei die Beziehung x + y = 2 gilt,

b) Kohlenwasserstoffwachse

und

c) Vollester aus gesättigten, geradkettigen $C_{12}$-$C_{34}$-Monocarbonsäuren und Polyolen mit 2 oder mehr als 2 Kohlenstofatomen und 2 oder mehr als 2 Hydroxygruppen

und/oder

Partialester aus gesättigten, geradkettigen $C_{12}$-$C_{34}$-Monocarbonsäuren und Polyolen mit 2 oder mehr als 2 Kohlenstofatomen und 2 oder mehr als 2 Hydroxygruppen, die im Zahlenmittel mindestens eine freie Hydroxylgruppe aufweisen, sowie gegebenenfalls

d) Zinksalze gesättigter, geradkettiger $C_8$-$C_{22}$-Monocarbonsäuren

sowie gegebenenfalls

e) sekundäre oder tertiäre Ester der phosphorigen Säure mit $C_8$-$C_{22}$-Monoalkanolen, Phenol und/oder $C_6$-$C_{12}$-alkyl-substituiertem Phenol und gegebenenfalls Polyolen, die 2 oder mehr als 2 Kohlenstoffatome und 2 oder mehr als 2 Hydroxylgruppen aufweisen,

f) synthetische, kristalline, 13 bis 25 Gew.-% gebundenes Wasser enthaltende, feinteilige Natriumalumosilikate, die - bezogen auf die wasserfreie Form - die Zusammensetzung 0,7 - 1,1 $Na_2O$ . $Al_2O_3$ . 1,3 - 2,4 $SiO_2$ aufweisen,

g) Epoxide von Estern ungesättigter, geradkettiger Fettsäuren und/oder

h) übliche, die Rheologie bzw. die Verarbeitbarkeit der Polymerisate beeinflussende Zusätze.

12. Stabilisierte Polymerisate nach Anspruch 11, enthaltend auf jeweils 100 Gew.-Teile Polymerisat

a) 0,25 - 1,0, insbesondere 0,5 - 0,7 Gew.-Teile der Ca-Komplexe von 1,3-Diketonen,

b) 0,1 - 1,0, insbesondere 0,3 - 0,5 Gew.-Teile der Kohlenwasserstoffwachse,

c) 0,3 - 1,5, insbesondere 0,5 - 1,0 Gew.-Teile der Vollester und/oder der Partialester gesättigter, geradkettiger $C_{12}$-$C_{34}$-Monocarbonsäuren,

d) 0,2 - 1,0, insbesondere 0,4 - 0,6 Gew.-Teile der Zinksalze gesättigter, geradkettiger $C_8$-$C_{22}$-Monocarbonsäuren,

sowie gegebenenfalls

e) 0,1 - 1, insbesondere 0,3 - 0,8 Gew.-Teile der sekundären oder tertiären Ester der phosphorigen Säure,

f) 0,3 - 3, insbesondere 0,5 - 1,5 Gew.-Teile der Natriumalumosilikate,

g) 0,5 - 3, insbesondere 1 - 1,5 Gew.-Teile der epoxidierten Fettsäureester und/oder

h) übliche Mengen der die Rheologie bzw. Verarbeitbarkeit beeinflussenden Zusätze.

## Claims

1. A stabilizer for polymers based on chlorine-containing olefins, containing the following components

a) Ca complexes of 1,3-diketones corresponding to the following formula

$$[R^1CO\text{-}CH = C(R^2)\text{-}O\text{-}]_x \; Ca(OH)_y$$

in which

$R^1$ and $R^2$ may be the same or different and represent radicals from the group consisting of $C_1$-$C_4$ alkyl and phenyl optionally substituted in the p-position, x has a value of 1 to 2 and y has a value of 1 to 0 with the proviso that x + y = 2,

b) hydrocarbon waxes

and

c) full esters of saturated, straight-chain $C_{12}$-$C_{34}$ monocarboxylic acids and polyols containing 2 or more than 2 carbon atoms and 2 or more than 2 hydroxy groups

and/or

partial esters of saturated, straight-chain $C_{12}$-$C_{34}$ monocarboxylic acids and polyols containing 2 or more 2 carbon atoms and 2 or more than 2 hydroxy groups which, as a number average, contain at least one free hydroxyl group and, optionally,

d) zinc salts of saturated, straight-chain $C_8$-$C_{22}$ monocarboxylic acids.

2. A stabilizer as claimed in claim 1 containing

a) Ca acetyl acetonate obtainable from 1 mol $Ca(OH)_2$ and 1 to 2 mol acetyl acetone,

b) paraffin or polyethylene waxes,

c) diesters of pentaerythritol, glycerol and/or trimethylol propane with saturated, straight-chain $C_{12}$-$C_{22}$ monocarboxylic acids and

d) optionally zinc distearate.

3. A stabilizer as claimed in at least one of claims 1 or 2, characterized in that it additionally contains

e) secondary or tertiary esters of phosphorous acid ($P(OH)_3$) with $C_8$-$C_{22}$ monoalkanols, phenol and/or $C_6$-$C_{22}$-alkyl-substituted phenol and, optionally, polyols containing 2 or more than 2 carbon atoms and 2 or more than 2 hydroxyl groups.

4. A stabilizer as claimed in at least one of claims 1 to 3, characterized in that it additionally contains the following additives:

f) synthetic, crystalline, finely divided sodium alumosilicates which contain 13 to 25% by weight bound water and, in their anhydrous form, have the composition $0.7 - 1.1\ Na_2O \cdot Al_2O_3 \cdot 1.3 - 2.4\ SiO_2$,

g) epoxides of esters of unsaturated, straight-chain fatty acids and/or

h) standard additives which influence the rheology or processability of the polymers.

5. A stabilizer as claimed in at least one of claims 1 to 4 having the following composition:

a) 1 to 4 and more especially 2 to 2.8 parts by weight of the Ca complexes of 1,3-diketones

b) 0.4 to 4.0 and more especially 1.2 to 2.0 parts by weight of the hydrocarbon waxes,

c) 1.2 to 6.0 and more especially 2.0 to 4.0 parts by weight of the full esters and/or partial esters of saturated, straight-chain $C_{12}$-$C_{34}$ monocarboxylic acids,

d) 0.8 to 4.0 and more especially 1.6 to 2.4 parts by weight of the zinc salts of saturated, straight-chain $C_8$-$C_{22}$ monocarboxylic acids

and, optionally,

e) 0.4 to 4 and more especially 1.2 to 3.2 parts by weight of the secondary or tertiary esters of phosphorous acid,

f) 1.2 to 12 and more especially 2.0 to 6.0 parts by weight of the sodium alumosilicates,

g) 2.0 to 12 and more especially 4.0 to 6.0 parts by weight of the epoxidized fatty acid esters and/or

h) typical quantities of the additives influencing the rheology or processability of the polymers.

6. A stabilizer as claimed in claim 5 containing

a) 10 to 40 and more especially 20 to 30 parts by weight Ca/diketone complexes to 100 parts by weight of the total weight of the stabilizer.

7. A stabilizer as claimed in at least one of claims 1 to 4 obtainable by reaction of calcium hydroxide and the 1,3-diketones in a melt of hydrocarbon wax and partial esters, any zinc salts to be added being added at least partly before the reaction or being prepared in the melt from zinc oxide and $C_8$-$C_{22}$ monocarboxylic acids before the Ca complexes.

8. A process for the production of stabilizers for polymers based on chlorine-containing olefins, containing the following components

a) Ca complexes of 1,3-diketones corresponding to the following formula

$$[R^1CO\text{-}CH = C(R^2)\text{-}O\text{-}]_x\ Ca(OH)_y$$

in which

$R^1$ and $R^2$ may be the same or different and represent radicals from the group consisting of $C_1$-$C_4$ alkyl and phenyl optionally substituted in the p-position, x has a value of 1 to 2 and y has a value of 1 to 0 with the proviso that x + y = 2,

b) hydrocarbon waxes

and

c) full esters of saturated, straight-chain $C_{12}$-$C_{34}$ monocarboxylic acids and polyols containing 2 or more than 2 carbon atoms and 2 or more than 2 hydroxy groups

and/or

partial esters of saturated, straight-chain $C_{12}$-$C_{34}$ monocarboxylic acids and polyols containing 2 or more than 2 carbon atoms and 2 or more than 2 hydroxy groups which, as a number average, contain at least one free hydroxyl group and, optionally,

d) zinc salts of saturated, straight-chain $C_8$-$C_{22}$ monocarboxylic acids,

characterized by a reaction of calcium hydroxide and the 1,3-diketones in a melt of hydrocarbon wax and full esters and/or partial esters, any zinc salts to be added being added at least partly before the reaction or being prepared in the melt from zinc oxide and $C_8$-$C_{22}$ monocarboxylic acids before the Ca complexes.

9. A process as claimed in claim 8, characterized in that

e) secondary or tertiary esters of phosphorous acid with $C_8$-$C_{22}$ monoalkanols, phenol and/or $C_6$-$C_{12}$-alkyl-substituted phenol and, optionally, polyols containing 2 or more than 2 carbon atoms and 2 or more than 2 hydroxyl groups,

f) synthetic, crystalline, finely divided sodium alumosilicates which contain 13 to 25% by weight bound water and, in their anhydrous form, have the composition 0.7 - 1.1 $Na_2O \cdot Al_2O_3 \cdot 1.3$ - 2.4 $SiO_2$,

g) epoxides of esters of unsaturated, straight-chain fatty acids and/or

h) standard additives which influence the rheology or processability of the polymers

are added before or after the reaction.

**10.** A process as claimed in claim 8 or 9 for the production of a stabilizer having the following composition

a) 1 to 4 and more especially 2 to 2.8 parts by weight of the Ca complexes of 1,3-diketones

b) 0.4 to 4.0 and more especially 1.2 to 2.0 parts by weight of the hydrocarbon waxes,

c) 1.2 to 6.0 and more especially 2.0 to 4.0 parts by weight of the full esters and/or partial esters of saturated, straight-chain $C_{12}$-$C_{34}$ monocarboxylic acids,

d) 0.8 to 4.0 and more especially 1.6 to 2.4 parts by weight of the zinc salts of saturated, straight-chain $C_8$-$C_{22}$ monocarboxylic acids

and, optionally,

e) 0.4 to 4 and more especially 1.2 to 3.2 parts by weight of the secondary or tertiary esters of phosphorous acid,

f) 1.2 to 12 and more especially 2.0 to 6.0 parts by weight of the sodium alumosilicates,

g) 2.0 to 12 and more especially 4.0 to 6.0 parts by weight of the epoxidized fatty acid esters and/or

h) typical quantities of the additives influencing the rheology or processability of the polymers.

**11.** Stabilized polymers based on chlorine-containing olefins, particularly rigid PVC, containing in effective quantities

a) Ca complexes of 1,3-diketones corresponding to the following formula

$$[R^1CO\text{-}CH = C(R^2)\text{-}O\text{-}]_x \, Ca(OH)_y$$

in which

$R^1$ and $R^2$ may be the same or different and represent radicals from the group consisting of $C_1$-$C_4$ alkyl and phenyl optionally substituted in the p-position, x has a value of 1 to 2 and y has a value of 1 to 0 with the proviso that x + y = 2,

b) hydrocarbon waxes

and

c) full esters of saturated, straight-chain $C_{12}$-$C_{34}$ monocarboxylic acids and polyols containing 2 or more than 2 carbon atoms and 2 or more than 2 hydroxy groups

and/or

partial esters of saturated, straight-chain $C_{12}$-$C_{34}$ monocarboxylic acids and polyols containing 2 or more than 2 carbon atoms and 2 or more than 2 hydroxy groups which, as a number average, contain at least one free hydroxyl group and, optionally,

d) zinc salts of saturated, straight-chain $C_8$-$C_{22}$ monocarboxylic acids.

and, optionally,

e) secondary or tertiary esters of phosphorous acid with $C_8$-$C_{22}$ monoalkanols, phenol and/or $C_6$-$C_{12}$-alkyl-substituted phenol and, optionally, polyols containing 2 or more than 2 carbon atoms and 2 or more than 2 hydroxyl groups,

f) synthetic, crystalline, finely divided sodium alumosilicates which contain 13 to 25% by weight bound water and, in their anhydrous form, have the composition 0.7 - 1.1 $Na_2O \cdot Al_2O_3 \cdot 1.3$ - 2.4 $SiO_2$,

g) epoxides of esters of unsaturated, straight-chain fatty acids and/or

h) standard additives which influence the rheology or processability of the polymers.

**12.** Stabilized polymers as claimed in claim 11 containing per 100 parts by weight polymer

a) 0.25 to 1.0 and more especially 0.5 to 0.7 part by weight of the Ca complexes of 1,3-diketones,

b) 0.1 to 1.0 and more especially 0.3 to 0.5 part by weight of the hydrocarbon waxes,

c) 0.3 to 1.5 and more especially 0.5 to 1.0 part by weight of the full esters and/or partial esters of saturated, straight-chain $C_{12}$-$C_{34}$ monocarboxylic acids,

d) 0.2 to 1.0 and more especially 0.4 to 0.6 part by weight of the zinc salts of saturated, straight-chain $C_8$-$C_{22}$ monocarboxylic acids

and, optionally,

11

e) 0.1 to 1 and more especially 0.3 to 0.8 part by weight of the secondary or tertiary esters of phosphorous acid,

f) 0.3 to 3 and more especially 0.5 to 1.5 parts by weight of the sodium alumosilicates,

g) 0.5 to 3 and more especially 1 to 1.5 parts by weight of the epoxidized fatty acid esters and/or

h) typical quantities of the additives which influence rheology or processability.

**Revendications**

1. Stabilisant pour polymères à base d'oléfines chlorées, contenant

   a) des complexes de Ca de 1,3-dicétones ayant la composition suivante

   $$[R^1CO-CH = C(R^2)-O-]_x \, Ca(OH)_y$$

   dans laquelle

   $R^1$ et $R^2$ représentent des radicaux identiques ou différents choisis parmi des groupes alkyle en $C_1$-$C_4$ et un groupe phényle éventuellement substitué en position para, et

   x a une valeur allant de 1 à 2 et y a une valeur allant de 1 à 0, la relation x + y = 2 étant valable,

   b) des cires hydrocarbonées

   et

   c) des esters complets d'acides monocarboxyliques en $C_{12}$-$C_{34}$ saturés, à chaînes droites, et de polyols ayant 2 ou plus de 2 atomes de carbone et 2 ou plus de 2 groupes hydroxy

   et/ou

   des esters partiels d'acides monocarboxyliques en $C_{12}$-$C_{34}$ saturés, à chaînes droites, et de polyols ayant 2 ou plus de 2 atomes de carbone et 2 ou plus de 2 groupes hydroxy, qui comportent en moyenne numérique au moins un groupe hydroxy libre, ainsi qu'éventuellement

   d) des sels de zinc d'acides monocarboxyliques en $C_8$-$C_{22}$ saturés, à chaînes droites.

2. Stabilisant selon la revendication 1, contenant

   a) de l'acétylacétonate de Ca, préparable à partir de 1 mole de $Ca(OH)_2$ et 1 à 2 moles d'acétylacétone,

   b) des cires de paraffines ou de polyéthylène,

   c) des diesters du pentaérythritol, du glycérol et/ou du triméthylolpropane avec des acides monocarboxyliques en $C_{12}$-$C_{22}$ saturés, à chaînes droites,

   ainsi que

   d) éventuellement du distéarate de zinc.

3. Stabilisant selon au moins une des revendications 1 ou 2, caractérisé en ce qu'il contient en outre

   e) des esters secondaires ou tertiaires de l'acide phosphoreux $[P(OH)_3]$ avec des monoalcanols en $C_8$-$C_{22}$, du phénol et/ou du phénol substitué par des groupes alkyle en $C_6$-$C_{12}$, et éventuellement des polyols qui comportent 2 ou plus de 2 atomes de carbone et 2 ou plus de 2 groupes hydroxy.

4. Stabilisant selon au moins l'une quelconque des revendications 1 à 3, caractérisé en ce qu'il contient en outre les additifs suivants :

   f) des aluminosilicates de sodium synthétiques, cristallins finement divisés, contenant de 13 à 25 % en poids d'eau liée, qui présentent - sur la base de la forme anhydre - la composition :

   $0,7 - 1,1 \, Na_2O \cdot Al_2O_3 \cdot 1,3 - 2,4 \, SiO_2$,

   g) des époxydes d'esters d'acides gras insaturés à chaînes droites et/ou

   h) des additifs usuels influençant la rhéologie ou l'aptitude à la mise en oeuvre des polymères.

5. Stabilisant selon au moins l'une quelconque des revendications 1 à 4, de composition :

   a) 1-4, en particulier 2-2,8 parties en poids des complexes de Ca de 1,3-dicétones,

   b) 0,4-4,0, en particulier 1,2-2,0 parties en poids des cires hydrocarbonées,

   c) 1,2-6,0, en particulier 2,0-4,0 parties en poids des esters complets et/ou des esters partiels d'acides monocarboxyliques en $C_{12}$-$C_{34}$ saturés, à chaînes droites,

   d) 0,8-4,0, en particulier 1,6-2,4 parties en poids des sels de zinc d'acides monocarboxyliques en $C_8$-$C_{22}$, saturés à chaînes droites,

   ainsi qu'éventuellement

e) 0,4-4, en particulier 1,2-3,2 parties en poids des esters secondaires ou tertiaires de l'acide phosphoreux,

f) 1,2-12, en particulier 2,0-6,0 parties en poids des aluminosilicates de sodium,

g) 2,0-12, en particulier 4,0-6,0 parties en poids des esters d'acides gras époxydés et/ou

h) des quantités usuelles des additifs influençant la rhéologie ou l'aptitude à la mise en oeuvre des polymères.

6. Stabilisant selon la revendication 5, contenant

a) 10-40, en particulier 20-30 parties en poids de complexes de Ca-dicétone pour 100 parties en poids du poids total du stabilisant.

7. Stabilisant selon au moins l'une quelconque des revendications 1 à 4, pouvant être préparé par une réaction d'hydroxyde de calcium et des 1,3-dicétones dans une masse fondue de cires hydrocarbonées et d'esters partiels, en ajoutant au moins en partie avant la réaction des sels de zinc à ajouter éventuellement, ou en les préparant dans la masse fondue, avant les complexes de Ca, à partir d'oxyde de zinc et d'acides monocarboxyliques en $C_8$-$C_{22}$.

8. Procédé pour la préparation de stabilisants pour polymères à base d'oléfines chlorées, contenant

a) des complexes de Ca de 1,3-dicétones ayant la composition suivante

$$[R^1CO-CH=C(R^2)-O-]_x \, Ca(OH)_y$$

dans laquelle

$R^1$ et $R^2$ représentent des radicaux identiques ou différents choisis parmi des groupes alkyle en $C_1$-$C_4$ et un groupe phényle éventuellement substitué en position para, et

x a une valeur allant de 1 à 2 et y a une valeur allant de 1 à 0, la relation x + y = 2 étant valable,

b) des cires hydrocarbonées

et

c) des esters complets d'acides monocarboxyliques en $C_{12}$-$C_{34}$ saturés, à chaînes droites, et de polyols ayant 2 ou plus de 2 atomes de carbone et 2 ou plus de 2 groupes hydroxy

et/ou

des esters partiels d'acides monocarboxyliques en $C_{12}$-$C_{34}$ saturés, à longues chaînes, et de polyols ayant 2 ou plus de 2 atomes de carbone et 2 ou plus de 2 groupes hydroxy, qui comportent en moyenne numérique au moins un groupe hydroxy libre, et éventuellement

d) des sels de zinc d'acides monocarboxyliques en $C_8$-$C_{22}$ saturés, à chaînes droites

caractérisé par une réaction de l'hydroxyde de calcium et des 1,3-dicétones dans une masse fondue de cire hydrocarbonée ainsi que d'esters complets et/ou d'esters partiels, en ajoutant au moins en partie avant la réaction des sels de zinc éventuellement à ajouter ou en les préparant avant les complexes de Ca dans la masse fondue, à partir d'oxyde de zinc et d'acides monocarboxyliques en $C_8$-$C_{22}$.

9. Procédé selon la revendication 8, caractérisé en ce que l'on ajoute, pendant ou après la réaction,

e) des esters secondaires ou tertiaires de l'acide phosphoreux [P(OH)$_3$] avec des monoalcanols en $C_8$-$C_{22}$, du phénol et/ou du phénol substitué par des groupes alkyle en $C_6$-$C_{12}$, et éventuellement des polyols qui comportent 2 ou plus de 2 atomes de carbone et 2 ou plus de 2 groupes hydroxy,

f) des aluminosilicates synthétiques cristallins finement divisés, contenant de 13 à 25 % en poids d'eau liée, qui présentent - sur la base de la forme anhydre - la composition :

0,7 - 1,1 $Na_2O$ . $Al_2O_3$ . 1,3 - 2,4 $SiO_2$ ,

g) des époxydes d'esters d'acides gras insaturés, à chaînes droites et/ou

h) des additifs usuels influençant la rhéologie ou l'aptitude à la mise en oeuvre des polymères.

10. Procédé selon la revendication 8 ou 9, pour la préparation d'un stabilisant de composition

a) 1-4, en particulier 2-2,8 parties en poids des complexes de Ca de 1,3-dicétones,

b) 0,4-4,0, en particulier 1,2-2,0 parties en poids des cires hydrocarbonées,

c) 1,2-6,0, en particulier 2,0-4,0 parties en poids des esters complets et/ou des esters partiels d'acides monocarboxyliques en $C_{12}$-$C_{34}$ saturés, à chaînes droites,

d) 0,8-4,0, en particulier 1,6-2,4 parties en poids des sels de zinc d'acides monocarboxyliques en $C_8$-$C_{22}$ saturés, à chaînes droites,

ainsi qu'éventuellement

e) 0,4-4, en particulier 1,2-3,2 parties en poids des esters secondaires ou tertiaires de l'acide phosphoreux,

f) 1,2-12, en particulier 2,0-6,0 parties en poids des aluminosilicates de sodium,

g) 2,0-12, en particulier 4,0-6,0 parties en poids des esters d'acides gras époxydés et/ou

h) des quantités usuelles des additifs influençant la rhéologie ou l'aptitude à la mise en oeuvre des polymères.

11. Polymères stabilisés à base d'oléfines chlorées, en particulier PVC rigide, contenant en quantités efficaces dans chaque cas

a) des complexes de Ca de 1,3-dicétones ayant la composition suivante

$$[R^1CO-CH = C(R^2)-O-]_x \, Ca(OH)_y$$

dans laquelle

$R^1$ et $R^2$ représentent des radicaux identiques ou différents choisis parmi des groupes alkyle en $C_1$-$C_4$ et un groupe phényle éventuellement substitué en position para, et

x a une valeur allant de 1 à 2 et y a une valeur allant de 1 à 0, la relation x + y = 2 étant valable,

b) des cires hydrocarbonées

et

c) des esters complets d'acides monocarboxyliques en $C_{12}$-$C_{34}$ saturés, à chaînes droites, et de polyols ayant 2 ou plus de 2 atomes de carbone et 2 ou plus de 2 groupes hydroxy

et/ou

des esters partiels d'acides monocarboxyliques en $C_{12}$-$C_{34}$ saturés, à chaînes droites, et de polyols ayant 2 ou plus de 2 groupes hydroxy, qui comportent en moyenne numérique au moins un groupe hydroxy libre, et éventuellement

d) des sels de zinc d'acides monocarboxyliques en $C_8$-$C_{22}$ saturés, à chaînes droites,

ainsi qu'éventuellement

e) des esters secondaires ou tertiaires de l'acide phosphoreux [$P(OH)_3$] avec des monoalcanols en $C_8$-$C_{22}$, du phénol et/ou du phénol substitué par des groupes alkyle en $C_6$-$C_{12}$, et éventuellement des polyols qui comportent 2 ou plus de 2 atomes de carbone et 2 ou plus de 2 groupes hydroxy,

f) des aluminosilicates de sodium synthétiques cristallins finement divisés, contenant de 13 à 25 % en poids d'eau liée, qui présentent - sur la base de la forme anhydre - la composition :

0,7 - 1,1 $Na_2O$ . $Al_2O_3$ . 1,3 - 2,4 $SiO_2$ ,

g) des époxydes d'esters d'acides gras insaturés, à chaînes droites et/ou

h) des additifs usuels influençant la rhéologie ou l'aptitude à la mise en oeuvre des polymères.

12. Polymères stabilisés selon la revendication 11, contenant, dans chaque cas pour 100 parties en poids de polymère

a) 0,25-1,0, en particulier 0,5-0,7 partie en poids des complexes de Ca de 1,3-dicétones,

b) 0,1-1,0, en particulier 0,3-0,5 partie en poids des cires hydrocarbonées,

c) 0,3-1,5, en particulier 0,5-1,0 partie en poids des esters complets et/ou des esters partiels d'acides monocarboxyliques en $C_{12}$-$C_{34}$ saturés, à chaînes droites,

d) 0,2-1,0, en particulier 0,4-0,6 partie en poids des sels de zinc d'acides monocarboxyliques en $C_8$-$C_{22}$ saturés, à chaînes droites, ainsi qu'éventuellement

e) 0,1-1, en particulier 0,3-0,8 partie en poids des esters secondaires ou tertiaires de l'acide phosphoreux,

f) 0,3-3, en particulier 0,5-1,5 partie en poids des aluminosilicates de sodium,

g) 0,5-3, en particulier 1-1,5 partie en poids des esters d'acides gras époxydés et/ou

h) des quantités usuelles des additifs influençant la rhéologie ou l'aptitude à la mise en oeuvre.